# FASCICULE DE BREVET EUROPEEN

(11) **EP 2 500 852 B1**
(45) Date de publication et mention de la délivrance du brevet: **19.08.2020**
(21) Numéro de dépôt: 12159326.3
(22) Date de dépôt: 13.03.2012
(51) Int. Cl.: G06Q 10/02, G06Q 50/30, G01C 21/34

(54) **Traitement de données pour la gestion d'offres et de demandes de trajets de covoiturage**
Datenverarbeitung für die Verwaltung von Angeboten und Nachfragen für Mitfahrgelegenheiten für bestimmte Reiseabschnitte
Data processing for managing offers and requests for car-pooling trips

(30) Priorité: 14.03.2011 FR 1152066
(43) Date de publication de la demande: 19.09.2012
(73) Titulaire: ORANGE, 75015 Paris (FR)
(72) Inventeur: Loyson, Samuel, 94120 Fontenay-sous-Bois (FR); Thebault, Bertrand, 78770 Thoiry (FR)
(74) Mandataire: Plasseraud IP

(56) Documents cités:
- EP-A1- 1 345 396
- EP-A1- 1 519 288
- FR-A1- 2 945 364
- US-A- 6 157 829
- US-A1- 2008 195 428
- MAHDI ASADPOUR ET AL: "A Privacy-Friendly RFID Protocol Using Reusable Anonymous Tickets", TRUST, SECURITY AND PRIVACY IN COMPUTING AND COMMUNICATIONS (TRUSTCOM), 2011 IEEE 10TH INTERNATIONAL CONFERENCE ON, IEEE, 16 novembre 2011 (2011-11-16), pages 206-213, XP032086803, DOI: 10.1109/TRUSTCOM.2011.29 ISBN: 978-1-4577-2135-9

## Description

La présente invention vise un traitement de données pour la gestion d'offres et de demandes de trajets de covoiturage.

Les systèmes de gestion de trajets de covoiturage connus utilisent généralement une même interface, par exemple une interface internet, pour recevoir des offres de trajets provenant de conducteurs, pour afficher ces offres de trajets, et pour recevoir des demandes de trajets provenant de passagers. En réponse à la réception d'une demande de trajet, les offres de trajets sont filtrées en fonction de critères (par exemple géographiques) contenus dans la demande, puis des offres de trajets correspondant aux critères du passager sont affichées.

Un inconvénient de ces systèmes est que, pour obtenir une liste d'offres susceptibles de l'intéresser, un passager doit au préalable se connecter à l'interface internet, puis définir des critères de sa demande, sans savoir à l'avance si une offre correspondra finalement à ces critères. Cette démarche peut entrainer une perte de temps pour le passager, qui peut finalement préférer ne pas utiliser un tel système. En conséquence, les offres proposées ne sont pas nécessairement consultées, même lorsqu'elles pourraient intéresser un passager.

Le document US-2009/234658 décrit un procédé de détermination d'une liste d'offres de trajets de covoiturage à suggérer à un employé. La liste d'offres est déterminée en utilisant une base de données contenant une liste des employés, et des heures d'arrivée et de départ de chaque employé.Ce procédé nécessite la mémorisation préalable d'informations relatives à chaque employé. En conséquence, la diffusion des offres est limitée.

D'autres exemples de l'état de la technique sont présentés dans le document FR 2 945 364.

La présente invention vient améliorer la situation.

A cet effet, l'invention propose un dispositif de traitement de données pour la gestion d'offres et de demandes de trajets de covoiturage. Le dispositif comporte :
- des moyens de gestion d'offres de trajets, configurés pour :
   - recevoir une offre de trajet d'un premier utilisateur, ladite offre de trajet comprenant des informations relatives au trajet et au premier utilisateur, et
   - mémoriser l'offre de trajet reçue en association avec un code d'identification,
- des moyens de gestion de l'affichage d'une liste d'offres de trajets sur un écran, configurés pour :
   - déterminer, parmi des offres de trajets reçus par les moyens de gestion d'offres de trajets, une liste d'offres de trajets et de codes d'identification associés à afficher sur l'écran, les offres de trajets de la liste étant sélectionnées en fonction d'une localisation de l'écran, et
   - transmettre la liste d'offres de trajets déterminée et les codes d'identification associés à l'écran,
- des moyens de gestion de demandes de trajets, configurés pour :
   - recevoir une demande de trajet d'un deuxième utilisateur, la demande de trajet comprenant un code d'identification associé à une offre de trajet de ladite liste affichée, et
   - mettre en relation le deuxième utilisateur avec l'utilisateur ayant transmis l'offre de trajet associée audit code d'identification reçu.

La solution proposée dans cette invention permet de réaliser une présélection d'offres de trajets susceptibles d'intéresser un passager, sans que celui-ci ait besoin de définir au préalable un ensemble de critères, notamment géographiques.

Une offre de trajet peut comprendre des informations permettant de contacter l'utilisateur ayant transmis l'offre de trajet, l'étape de mise en relation étant alors effectuée sans transmettre les informations permettant de contacter l'utilisateur.

Le dispositif peut comprendre des moyens d'association d'un code d'identification d'offre à une offre de trajet configurés pour, après expiration d'une première offre de trajet, associer à une deuxième offre de trajet le code d'identification d'offre ayant été associé à la première offre de trajet.

Les moyens d'association peuvent être configurés pour attendre une durée d'attente minimale avant association du code d'identification d'offre à une deuxième offre de trajet.

L'utilisateur ayant transmis la première offre de trajet peut être distinct de l'utilisateur ayant transmis la deuxième offre de trajet.

Les moyens de mise en relation peuvent comprendre un serveur vocal interactif configuré pour recevoir un code d'identification d'offre sous forme de code numérique et effectuer une mise en relation téléphonique du deuxième utilisateur avec ledit utilisateur.

Une offre de trajet comprend avantageusement des informations géographiques et des informations temporelles relatives au trajet, ainsi que des informations permettant de contacter l'utilisateur ayant transmis ladite offre de trajet.

Une offre de trajet peut être reçue par les moyens de gestion d'offres de trajets par le biais d'une interface internet, d'une interface vocale ou d'une interface SMS (Short Message Service).

Une demande de trajet peut être reçue par les moyens de gestion de demandes de trajets par le biais d'une interface internet, d'une interface vocale ou d'une interface SMS.

Les moyens de gestion de l'affichage d'une liste d'offres de trajets sur un écran peuvent en outre être configurés pour réaliser une géolocalisation de l'écran.

L'invention propose également un procédé de traitement de données pour la gestion d'offres et de demandes de trajets de covoiturage. Le procédé comporte des étapes :
- sur réception d'une offre de trajet d'un premier utilisateur, ladite offre de trajet comprenant des informations relatives au trajet et au premier utilisateur, mémoriser l'offre de trajet reçue en association avec un code d'identification,
- déterminer, parmi des offres de trajets reçus, une liste d'offres de trajets et de codes d'identification associés à afficher sur un écran, les offres de trajets de la liste étant sélectionnées en fonction d'une localisation de l'écran,
- sur réception d'une demande de trajet d'un deuxième utilisateur, la demande de trajet comprenant un code d'identification associé à une offre de trajet de ladite liste affichée, identifier l'offre de trajet correspondant au code d'identification reçu pour mettre en relation le deuxième utilisateur avec l'utilisateur ayant transmis l'offre de trajet associée audit code d'identification reçu.

Le procédé peut comprendre, après expiration d'une première offre de trajet, une étape d'association à une deuxième offre de trajet du code d'identification d'offre ayant été associé à la première offre de trajet.

Une offre de trajet peut comprendre des informations géographiques et des informations temporelles relatives au trajet, ainsi que des informations permettant de contacter l'utilisateur ayant transmis ladite offre de trajet.

Une offre de trajet peut être reçue par le biais d'une interface internet, d'une interface vocale ou d'une interface SMS.

Une demande de trajet peut être reçue par le biais d'une interface internet, d'une interface vocale ou d'une interface SMS.

Le procédé peut en outre comporter une étape de géolocalisation de l'écran.

L'invention propose également un programme informatique comportant des instructions pour la mise en œuvre du procédé, lorsque ce programme est exécuté par un processeur.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est un schéma fonctionnel montrant un serveur de gestion d'offres et de demandes de trajets de covoiturage selon un mode de réalisation de l'invention ; et
- la Figure 2 est un organigramme illustrant les étapes d'un procédé de gestion d'offres et de demandes de trajets de covoiturage, cet organigramme pouvant représenter l'algorithme général du programme informatique au sens de l'invention ;

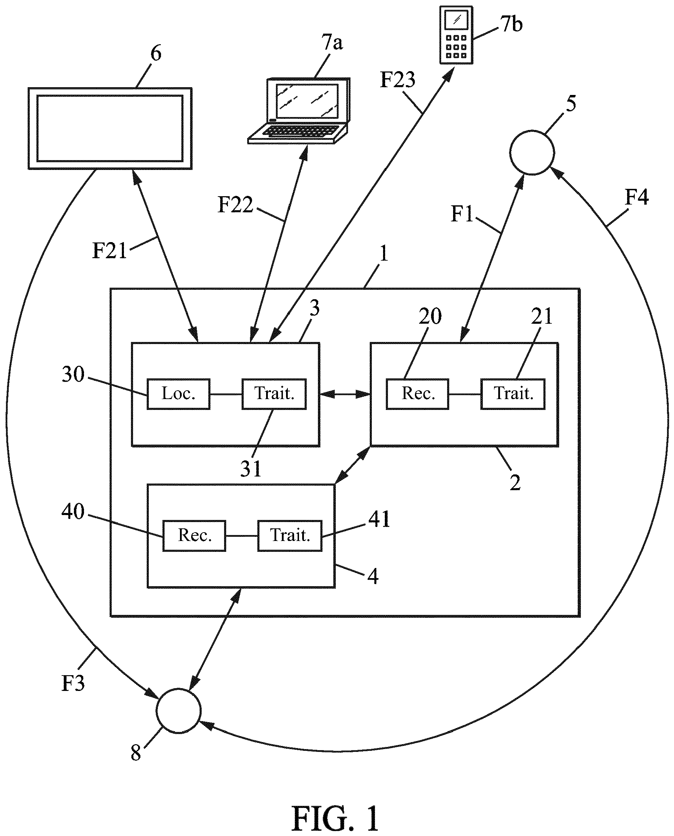

La figure 1 représente un serveur 1 de gestion d'offres et de demandes de trajets de covoiturage comportant des moyens de gestion d'offres de trajets 2, des moyens de gestion de l'affichage d'une liste d'offres de trajets 3 sur un écran, et des moyens de gestion de demandes de trajets 4.

Les moyens de gestion d'offres de trajets 2 comprennent un bloc de réception 20 configuré pour recevoir une offre de trajet de covoiturage d'un utilisateur 5, appelé conducteur. L'offre de trajet peut par exemple être transmise au serveur 1 par le biais d'une interface internet, d'une interface vocale ou d'une interface SMS. Le bloc de réception 20 est également configuré pour mémoriser l'offre de trajet reçue.

L'offre de trajet comprend des informations géographiques et des informations temporelles relatives au trajet, ainsi que des informations relatives à l'utilisateur 5. Les informations géographiques comprennent par exemple un lieu de départ, un lieu d'arrivée, et/ou des positions intermédiaires se trouvant sur le trajet. Les informations temporelles comprennent par exemple une heure de départ, une heure d'arrivée, et/ou une durée de trajet. Les informations relatives à l'utilisateur 5 comprennent des informations permettant de contacter l'utilisateur 5, par exemple un numéro de téléphone de l'utilisateur et/ou une adresse e-mail de l'utilisateur. D'autres informations relatives à l'utilisateur 5 peuvent également être transmises au serveur 1, pour préciser par exemple si l'utilisateur 5 est un homme ou une femme, s'il est fumeur ou non, s'il accepte ou non les détours, s'il aime discuter, s'il écoute la radio, quelle catégorie de voiture il possède, etc.

L'offre de trajet peut en outre comprendre des informations complémentaires, par exemple des informations relatives au prix d'indemnisation demandé pour le trajet de covoiturage.

Les moyens de gestion d'offres de trajets 2 comprennent également un bloc de traitement, dit bloc d'allocation 21, configuré pour associer un code d'identification à l'offre de trajet reçue.

Les moyens de gestion d'offres de trajets 2 comprennent en outre une mémoire pour mémoriser en association le code d'identification alloué et l'offre de trajet associée, notamment les informations géographiques, les informations temporelles et les informations relatives à l'utilisateur.

Le bloc d'allocation utilise un ensemble de codes d'identification valides pour affecter un code d'identification à une offre de trajet. Dans cet ensemble de codes d'identification valides se trouvent à la fois des codes d'identification valides associés à une offre et des codes d'identification valides non associés à une offre.

Lors de l'affectation d'un code d'identification à une offre, différentes méthodes sont possibles pour une sélection d'un code d'identification dans l'ensemble de codes d'identification valides :
- soit cet ensemble de codes d'identification valides est géré comme une pile LIFO (Last In, First Out), c'est-à-dire que le code d'identification affecté à une nouvelle offre est le code d'identification inséré en dernier dans la pile ;
- soit cet ensemble de codes d'identification valides est géré comme une pile FIFO (First In, First Out), c'est-à-dire que le code d'identification affecté à une nouvelle offre est le code d'identification inséré en premier dans la pile ;
- soit le code d'identification affecté à une nouvelle offre est sélectionné aléatoirement dans l'ensemble de codes d'identification valides.
- soit cet ensemble de codes d'identification valides est géré sous forme d'une table, l'indice d'un code dans cette table représentant le code d'identification, et la valeur stockée étant une valeur booléenne qui indique si le code d'identification est associé ou non à une offre. Le code d'identification affecté à une nouvelle offre est systématiquement le code correspondant à l'index le plus petit dont le marqueur de validité est faux, c'est-à-dire indique que le code d'identification n'est pas associé à une offre. Le marqueur de validité de l'index correspondant au code d'identification passe à vrai au moment de l'affectation (et repassera à faux à l'expiration du code d'identification).

Seul un code d'identification valide et associé à une offre de trajet non expirée (c'est-à-dire que la date / heure de début du trajet en question n'est pas passée) peut être utilisé pour demander une mise en relation. Les autres codes d'identification valides servent de réservoir pour l'association d'un code à une offre de trajet.

Dans une variante, les codes d'identification de trajet sont recyclés et réutilisés plusieurs fois, et en pratique indéfiniment, pour des offres de trajets à venir. Le bloc d'allocation est configuré pour réutiliser un nombre illimité de fois chaque code d'identification d'offre: ce bloc d'allocation est notamment configuré pour, après expiration d'une première offre de trajet, associer à une deuxième offre de trajet le code d'identification d'offre ayant été associé à la première offre de trajet. Cette méthode de réutilisation de code d'identification est appliquée même si l'utilisateur ayant transmis la première offre de trajet est distinct de l'utilisateur ayant transmis la deuxième offre de trajet.

Ainsi, la taille de l'ensemble des codes d'identification valides peut être réduite fortement, et comprendre un nombre de codes d'identification correspondant (au moins égal ou un peu supérieur) au nombre maximal d'offres non expirées à un instant donné.

Par exemple, si le nombre maximal d'offres non expirées à un instant donné est égal à 3768, le nombre de codes d'identification valides gérés pourra être de 4000. Lorsqu'en outre ces codes d'identification sont des codes numériques, on comprend que le nombre de chiffre nécessaire pour encoder un code d'identification d'offre sera réduit, égal à 4 dans l'exemple choisi. Ceci facilite grandement la mémorisation par les utilisateurs d'un code d'identification et réduit la quantité d'information (c'est-à-dire le nombre de chiffres) à transmettre par un utilisateur en vue de la mise en relation.

Cette mesure permet en outre d'éviter qu'un premier utilisateur proposant une offre de trajet soit harcelé par un deuxième utilisateur qui utiliserait de manière répétée le code d'identification de cette offre pour être mis en relation plusieurs fois avec ce premier utilisateur.

En effet, dès que l'offre de trajet du premier utilisateur aura expiré, le code d'identification affecté à cette offre de trajet ne permettra plus la mise en relation avec le premier utilisateur : le code d'identification sera invalidé, puis réutilisé pour une autre offre, et, préférentiellement, pour une offre proposée par un autre utilisateur, de manière à ce que le code d'identification ne permette plus la mise en relation avec ce premier utilisateur mais avec un autre utilisateur ayant proposé cette autre offre.

De préférence, un code d'identification affecté à une offre de trajet, ne sera pas réutilisé immédiatement pour être affecté à une autre offre, mais une durée prédéfinie avant sa réaffectation sera imposée, pendant laquelle le code d'identification sera invalide et ne permettra la mise en relation avec aucun utilisateur. A l'expiration de cette durée prédéfinie, le code d'identification fera à nouveau partie de la liste des codes d'identification valides et sera utilisable pour être affecté à une nouvelle offre.

En option, un utilisateur ayant proposé une offre et subissant un harcèlement par utilisation répétée d'un code d'identification associé à son offre de trajet, le serveur 1 sera doté de moyens pour qu'un utilisateur puisse demander l'invalidation de son offre et/ou demander l'allocation d'un nouveau code d'identification à son offre afin de ne plus pouvoir être joint par l'ancien code d'identification.

Dans une variante, le bloc d'allocation est configuré pour attendre une durée d'attente minimale avant association du code d'identification d'offre à une deuxième offre de trajet. Une durée d'attente est affectée à un code d'identification d'offre de trajet : ce n'est que lorsqu'une période de temps au moins égale à cette durée d'attente s'est écoulée après la date et/ou heure de début du trajet que le code d'identification d'offre fera partie des codes d'identification valides pouvant être associés à une offre de trajet. En conséquence, les codes d'identification valides associés à une offre comprendront d'une part, des codes associés à une offre non expirée (c'est-à-dire que la date et/ou heure de début du trajet en question n'est pas passée), et d'autre part, des codes d'identification valides associés à une offre expirée (c'est-à-dire que la date et/ou heure de début du trajet en question est passée), mais pour laquelle la durée d'attente du code n'est pas expirée. Un telle durée d'attente permet donc s'assurer qu'un code d'identification valide ne soit pas réaffecté à une autre offre alors que l'offre initiale est en cours et pourrait encore faire l'objet d'une demande de mise en relation et également d'éviter les confusions entre offres de trajet par utilisation de manière rapprochée temporellement d'un même code pour deux offres différentes.

Les moyens de gestion de l'affichage 3 sont configurés pour commander l'affichage, sur un écran 6, 7a, 7b d'une liste d'offres de trajets déterminée en fonction d'une localisation de l'écran. Le serveur 1 est configuré pour communiquer avec un ensemble d'écrans, par exemple par le biais d'une connexion wifi ou données mobiles et/ou d'une connexion utilisant une interface de programmation (API - Application Programming Interface) d'un service web de covoiturage.

L'ensemble d'écrans comprend un écran 6 disposé de manière fixe dans un lieu public, tel qu'un aéroport, une gare ferroviaire, une gare routière, un centre commercial, une agence de la poste, un bureau de tabac, ou un distributeur automatique de billets. De préférence, l'écran 6 comprend un bloc de mémorisation configuré pour mémoriser la dernière liste d'offres de trajets reçue du serveur 1. Ainsi, en cas de perte de la connexion entre le serveur 1 et l'écran 6, une liste d'offres peut toujours être affichée.

L'ensemble d'écrans comprend également un écran d'équipement mobile, par exemple un écran 7a d'un ordinateur portable supportant la géolocalisation ou un écran 7b d'un téléphone mobile supportant la géolocalisation.

Les moyens de gestion de l'affichage 3 comprennent un bloc de localisation 30 configuré pour déterminer une localisation de l'écran 6, 7a, 7b. Dans le cas de l'écran fixe 6, la localisation est par exemple mémorisée dans le bloc de localisation 30 lors de l'installation de l'écran 6. Dans le cas de l'écran mobile 7a, 7b, la localisation est réalisée par la géolocalisation de l'équipement mobile au moment de la connexion au serveur 1.

Les moyens de gestion de l'affichage 3 comprennent en outre un bloc de traitement 31 configuré pour déterminer, en fonction de la localisation de l'écran 6, 7a, 7b, une liste d'offres à afficher sur l'écran 6, 7a, 7b, et pour commander l'affichage de la liste sur l'écran 6, 7a, 7b.

De préférence, la liste d'offres de trajets affichée sur l'écran 6, 7a, 7b contient uniquement des offres de trajets passant à proximité de l'écran 6, 7a, 7b dans une plage horaire prédéterminée. L'affichage de chaque offre de trajet comprend le code d'identification associé à l'offre de trajet.

Les moyens de gestion de demandes de trajets 4 comportent un bloc de réception 40 configuré pour recevoir une demande de trajet de covoiturage d'un utilisateur 8, appelé passager. La demande de trajet comprend le code d'identification associé à l'offre de trajet qui intéresse le passager 8. La demande de trajet est par exemple transmise au serveur 1 par le biais d'une interface internet, d'une interface vocale, ou d'une interface SMS.

Les moyens de gestion de demandes de trajets 4 comportent également un bloc de traitement 41 configuré pour déterminer l'offre de trajet correspondant au code d'identification reçu, et pour mettre le passager 8 en relation avec le conducteur 5 correspondant.

Dans le cas de l'écran fixe 6, les offres de trajets, l'affichage des offres de trajets et les demandes de trajets sont gérées via trois circuits différents, par exemple une interface internet pour la réception des offres de trajets, une connexion wifi ou de données mobiles entre le serveur 1 et l'écran 6 pour la gestion de l'affichage, et une interface vocale utilisant un serveur vocal (SVI) pour la gestion des demandes de trajets.

Dans le cas de l'écran mobile 7a, 7b, les offres de trajets, l'affichage des offres de trajets et les demandes de trajets peuvent être gérées via trois circuits différents ou via deux circuits en utilisant une même interface internet pour recevoir les offres de trajets et les demandes de trajets.

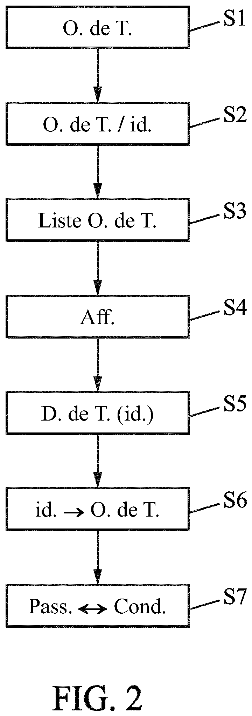

En se référant à la figure 2, on décrit ci-dessous les étapes d'un procédé de gestion d'offres et de demandes de trajets de covoiturage.

A l'étape S1, un conducteur 5 souhaitant proposer un trajet de covoiturage transmet une offre de trajet au serveur 1, comme symbolisé par la flèche F1 sur la figure 1. L'offre est par exemple transmise par le biais d'une interface internet, d'une interface vocale ou d'une interface SMS. Comme décrit précédemment, l'offre de trajet comprend des informations géographiques et des informations temporelles relatives au trajet, ainsi que des informations relatives à l'utilisateur.

A l'étape S2, le serveur 1 reçoit l'offre de trajet, la mémorise, et lui associe un code d'identification.

Les étapes S1 et S2 sont réalisées pour chaque offre de trajet transmise au serveur 1. On notera que, après avoir transmis une offre de trajet, le conducteur 5 peut utiliser l'interface internet, l'interface vocale ou l'interface SMS pour annuler ou modifier son offre de trajet.

A l'étape S3, l'écran 6, 7a, 7b transmet au serveur 1 une requête de liste de trajets à afficher et correspondant à sa localisation.

Dans le cas de l'écran fixe 6 une requête est par exemple émise automatiquement périodiquement. Dans le cas de l'écran mobile 7a, 7b, une requête est émise lorsque l'utilisateur de l'équipement mobile lance une application du système de covoiturage.

En réponse à cette requête, le serveur 1 détermine une liste d'offres de trajets à afficher sur l'écran 6, 7a, 7b, en fonction de la localisation de l'écran 6, 7a, 7b et de l'instant de l'affichage.

Dans le cas de l'écran fixe 6, la localisation de l'écran 6 est déjà mémorisée dans le serveur 1. Dans le cas de l'écran mobile 7a, 7b, l'étape S3 comporte une étape de géolocalisation.

Pour déterminer la liste d'offres de trajets à afficher sur l'écran 6, 7a, 7b, le serveur 1 compare par exemple la localisation de l'écran 6, 7a, 7b et les données géographiques des offres de trajets mémorisées, pour sélectionner, parmi les offres de trajets mémorisées, les offres de trajets passant à proximité de l'écran 6, 7a, 7b, c'est-à-dire les trajets passant à une distance de l'écran 6, 7a, 7b inférieure à une distance maximale prédéterminée, qui est par exemple fixée à 3km. Puis, le serveur 1 compare l'instant de l'affichage avec les données temporelles des offres de trajets passant à proximité de l'écran 6, 7a, 7b, pour sélectionner, parmi les offres de trajets passant à proximité de l'écran 6, 7a, 7b, les offres de trajets correspondant à une plage horaire prédéterminée, par exemple les offres de trajets non échues du jour.

Ainsi, la liste d'offres de trajets à afficher sur l'écran 6, 7a, 7b comporte une présélection d'offres de trajets susceptibles d'intéresser un passager regardant l'écran 6, 7a, 7b.

Lorsque la liste d'offres de trajets a été déterminée, le serveur 1 transmet la liste d'offres de trajets et les codes d'identification associés à l'écran 6, 7a, 7b, comme symbolisé par la flèche F21, respectivement la flèche F22 et la flèche F23, sur la figure 1.

A l'étape S4, l'écran 6, 7a, 7b affiche la liste d'offres de trajets et les codes d'identification associés transmis par le serveur 1 à l'étape S3. Pour chaque offre de trajet de la liste, les informations affichées comprennent par exemple, outre le code d'identification associé à l'offre, une heure de départ, un lieu de départ, un lieu d'arrivée, et un prix d'indemnisation. D'autres informations peuvent également être affichées, par exemple des informations relatives au conducteur 5.

L'écran 6, 7a, 7b peut en outre afficher un numéro d'appel d'un serveur vocal interactif (SVI), national ou local, destiné à être appelé par un passager intéressé par une des offres affichées sur l'écran 6, 7a, 7b et qui souhaite être mis en contact avec le conducteur ayant proposé l'offre.

Si besoin, la liste des offres de trajets peut être affichée sur plusieurs pages d'écrans qui s'affichent sur l'écran 6, 7a, 7b par rotations successives (en boucle).

Les étapes S3 et S4 sont réalisées pour chaque écran sur lequel une liste d'offres de trajets doit être affichée. Dans le cas de l'écran fixe 6, les étapes S3 et S4 sont exécutées périodiquement pour mettre à jour la liste d'offres de trajets affichée sur l'écran, par exemple toutes les minutes. Dans le cas de l'écran mobile 7a, 7b, les étapes S3 et S4 sont exécutées en réponse à une requête de l'utilisateur de l'équipement mobile.

A l'étape S5, un passager 8 consulte la liste d'offres de trajets affichée sur l'écran 6, comme symbolisé par la flèche F3, et est intéressé par une offre de la liste. Le passager 8 se connecte alors au serveur 1 via une interface internet, vocale ou SMS. Par exemple, l'interface utilisée est une interface vocale et le passager 8 compose alors le numéro du SVI pour se connecter au serveur 1. Puis, le passager 8 transmet au serveur 1 une demande de trajet comprenant le code d'identification de l'offre qui l'intéresse.

A l'étape S6, le serveur 1 reçoit la demande de trajet et détermine l'offre de trajet associée en utilisant le code d'identification.

Durant l'appel sur le SVI, ou la connexion sur l'interface internet, le serveur 1 peut indiquer au passager 8, en réponse à la réception du code d'identification transmis par le passager 8, des informations relatives à l'offre de trajet correspondante (par exemple l'heure de départ, le lieu de départ, etc.), pour permettre au passager 8 de vérifier que l'offre proposée est bien celle qui l'intéresse, et pour lui permettre de confirmer ou non sa demande de mise en relation avec le conducteur 5.

A l'étape S7, le serveur 1 extrait de la mémoire les informations permettant de contacter l'utilisateur ayant été mémorisées pour l'offre identifiée par le code d'identification reçu : par exemple le numéro de téléphone du conducteur 5. Puis le serveur 1 met en relation le passager 8 et le conducteur 5, comme symbolisé par la flèche F4.

L'utilisation d'un SVI permet de mettre le passager 8 en relation avec le conducteur 5 sans transmettre le numéro de téléphone du conducteur 5 au passager 8, ce qui améliore la confidentialité. Une fois mis en relation, le passager 8 et le conducteur 5 peuvent se mettre d'accord sur les modalités de voyage de covoiturage, notamment le lieu de collecte, de dépose, le prix d'indemnisation, des exigences particulières, etc.

En outre, du fait que seul le code d'identification d'offre soit nécessaire pour la mise en relation, il n'est pas nécessaire de transmettre les informations permettant de contacter l'utilisateur proposant une offre de trajet. En effectuant la mise en relation sans transmettre ces informations, on préserve donc l'anonymat des utilisateurs proposant des offres de trajet.

Cette mesure, combinée à la réutilisation pour plusieurs offres de différents utilisateurs d'un même code d'identification, améliore encore le respect de la vie privée des utilisateurs proposant les offres en garantissant à la fois leur anonymat et en évitant qu'ils ne soient harcelés.

Ainsi, le système et le procédé selon l'invention permettent de réaliser une présélection d'offres de trajets susceptibles d'intéresser un passager, sans que celui-ci ait besoin de définir au préalable un ensemble de critères, notamment géographiques.

Bien entendu, la présente invention ne se limite pas aux formes de réalisation décrites ci-avant à titre d'exemples ; elle s'étend à d'autres variantes. Par exemple, le serveur peut en parallèle commander l'affichage sur l'écran d'un contenu supplémentaire, de préférence adapté à la localisation de l'écran, par exemple des informations météorologiques, de la publicité, etc.

## Revendications

1. Dispositif de traitement de données (1) pour la gestion d'offres et de demandes de trajets de covoiturage, **caractérisé par** :
- des moyens de gestion d'offres de trajets (2), configurés pour :
• recevoir une offre de trajet d'un premier utilisateur (5), ladite offre de trajet comprenant des informations relatives au trajet et au premier utilisateur, et
• mémoriser l'offre de trajet reçue en association avec un code d'identification d'offre,
- des moyens de gestion de l'affichage d'une liste d'offres de trajets (3) sur un écran (6, 7a, 7b), configurés pour :
• déterminer, parmi des offres de trajets reçus par les moyens de gestion d'offres de trajets, une liste d'offres de trajets et de codes d'identification d'offres associés à afficher sur l'écran, les offres de trajets de la liste étant sélectionnées en fonction d'une localisation de l'écran, et
• transmettre à l'écran la liste d'offres de trajets déterminée et les codes d'identification associés,
- des moyens de mise en relation, configurés pour :
• recevoir d'un deuxième utilisateur (8) un code d'identification d'offre associé à une offre de trajet de ladite liste affichée, et
• mettre en relation le deuxième utilisateur avec le premier utilisateur ayant transmis l'offre de trajet associée audit code d'identification d'offre reçu ;
dans lequel les moyens de mise en relation comprennent un serveur vocal interactif configuré pour recevoir du deuxième utilisateur le code d'identification d'offre sous forme de code numérique durant un appel au serveur vocal interactif, et effectuer une mise en relation téléphonique du deuxième utilisateur avec ledit premier utilisateur, durant l'appel au serveur vocal interactif.

2. Dispositif de traitement de données selon la revendication 1, **caractérisé en ce qu'**une offre de trajet comprend des informations permettant de contacter l'utilisateur ayant transmis ladite offre de trajet, l'étape de mise en relation étant effectuée sans transmettre les informations permettant de contacter ledit utilisateur.

3. Dispositif de traitement de données selon la revendication 1 ou 2, comprenant des moyens d'association d'un code d'identification d'offre à une offre de trajet configurés pour, après expiration d'une première offre de trajet, associer à une deuxième offre de trajet le code d'identification d'offre ayant été associé à la première offre de trajet.

4. Dispositif de traitement de données selon la revendication 3, dans lequel les moyens d'association sont configurés pour attendre une durée d'attente minimale avant association du code d'identification d'offre à une deuxième offre de trajet.

5. Dispositif de traitement de données selon la revendication 3 dans lequel l'utilisateur ayant transmis la première offre de trajet est distinct de l'utilisateur ayant transmis la deuxième offre de trajet.

6. Dispositif de traitement de données selon la revendication 1, **caractérisé en ce qu'**une offre de trajet est reçue par les moyens de gestion d'offres de trajets par le biais d'une interface internet, d'une interface vocale ou d'une interface SMS.

7. Dispositif de traitement de données selon la revendication 1, **caractérisé en ce qu'**une demande de trajet est reçue par les moyens de gestion de demandes de trajets par le biais d'une interface internet, d'une interface vocale, ou d'une interface SMS.

8. Dispositif de traitement de données selon la revendication 1, **caractérisé en ce que** les moyens de gestion de l'affichage d'une liste d'offres de trajets sur un écran sont en outre configurés pour réaliser une géolocalisation de l'écran.

9. Procédé de traitement de données pour la gestion d'offres et de demandes de trajets de covoiturage, **caractérisé en ce qu'**il comporte les étapes suivantes :
- sur réception d'une offre de trajet d'un premier utilisateur (5), ladite offre de trajet comprenant des informations relatives au trajet et au premier utilisateur, mémoriser (S2) l'offre de trajet reçue en association avec un code d'identification d'offre,
- déterminer (S3), parmi des offres de trajets reçus, une liste d'offres de trajets et de codes d'identification d'offre associés à afficher sur un écran, les offres de trajets de la liste étant sélectionnées en fonction d'une localisation de l'écran,
- sur réception d'un deuxième utilisateur d'un code d'identification d'offre associé à une offre de trajet de ladite liste affichée, mettre en relation (S7) le deuxième utilisateur avec le premier utilisateur ayant transmis l'offre de trajet associée audit code d'identification d'offre reçu,
dans lequel la mise en relation comprend la réception du code d'identification d'offre sous forme de code numérique auprès d'un serveur vocal interactif durant l'appel au serveur vocal interactif, et une mise en relation téléphonique du deuxième utilisateur avec ledit premier utilisateur durant l'appel au serveur vocal interactif,.

10. Procédé selon la revendication 9, comprenant, après expiration d'une première offre de trajet, une étape d'association à une deuxième offre de trajet du code d'identification d'offre ayant été associé à la première offre de trajet.

11. Procédé selon la revendication 9, **caractérisé en ce qu'**il comporte une étape de géolocalisation de l'écran.

12. Programme informatique comportant des instructions pour la mise en œuvre du procédé selon l'une quelconque des revendications 9 à 11, lorsque ce programme est exécuté par un processeur.

## Patentansprüche

1. Datenverarbeitungsvorrichtung (1) zur Verwaltung von Angeboten und Anfragen von Fahrgemeinschaftsstrecken, **gekennzeichnet durch**:
- Verwaltungseinrichtungen von Streckenangeboten (2), die konfiguriert sind, um:
• ein Streckenangebot von einem ersten Benutzer (5) zu empfangen, wobei das Streckenangebot Informationen bezüglich der Strecke und des ersten Benutzers enthält, und
• das empfangene Streckenangebot zusammen mit einem Angebot-Identifikationscode zu speichern,
- Verwaltungseinrichtungen der Anzeige einer Liste von Streckenangeboten (3) auf einem Bildschirm (6, 7a, 7b), die konfiguriert sind, um:
• aus von den Verwaltungseinrichtungen von Streckenangeboten empfangenen Streckenangeboten eine auf dem Bildschirm anzuzeigende Liste von Streckenangeboten und von zugeordneten Angebot-Identifikationscodes zu bestimmen, wobei die Streckenangebote der Liste abhängig von einer Lokalisierung des Bildschirms ausgewählt werden, und
• die bestimmte Liste von Streckenangeboten und die zugeordneten Identifikationscodes an den Bildschirm zu übertragen,
- Verknüpfungseinrichtungen, die konfiguriert sind, um:
• von einem zweiten Benutzer (8) einen einem Streckenangebot der angezeigten Liste zugeordneten Angebot-Identifikationscode zu empfangen, und
• den zweiten Benutzer mit dem ersten Benutzer zu verknüpfen, der das dem empfangenen Angebot-Identifikationscode zugeordnete Streckenangebot übertragen hat;
wobei die Verknüpfungseinrichtungen einen interaktiven Sprachserver enthalten, der konfiguriert ist, vom zweiten Benutzer den Angebot-Identifikationscode in Form eines digitalen Codes während eines Anrufs beim interaktiven Sprachserver zu empfangen, und während des Anrufs beim interaktiven Sprachserver eine telefonische Verknüpfung des zweiten Benutzers mit dem ersten Benutzer auszuführen.

2. Datenverarbeitungsvorrichtung nach Anspruch 1, **dadurch gekennzeichnet, dass** ein Streckenangebot Informationen enthält, die es ermöglichen, den Benutzer zu kontaktieren, der das Streckenangebot übertragen hat, wobei der Verknüpfungsschritt ausgeführt wird, ohne die Informationen zu übertragen, die es ermöglichen, den Benutzer zu kontaktieren.

3. Datenverarbeitungsvorrichtung nach Anspruch 1 oder 2, die Zuordnungseinrichtungen eines Angebot-Identifikationscodes zu einem Streckenangebot enthält, die konfiguriert sind, nach dem Ablauf eines ersten Streckenangebots den Angebot-Identifikationscode, der dem ersten Streckenangebot zugeordnet worden war, einem zweiten Streckenangebot zuzuordnen.

4. Datenverarbeitungsvorrichtung nach Anspruch 3, wobei die Zuordnungseinrichtungen konfiguriert sind, eine minimale Wartedauer vor der Zuordnung des Angebot-Identifikationscodes zu einem zweiten Streckenangebot abzuwarten.

5. Datenverarbeitungsvorrichtung nach Anspruch 3, wobei der Benutzer, der das erste Streckenangebot übertragen hat, sich von dem Benutzer unterscheidet, der das zweite Streckenangebot übertragen hat.

6. Datenverarbeitungsvorrichtung nach Anspruch 1, **dadurch gekennzeichnet, dass** ein Streckenangebot von den Verwaltungseinrichtungen von Streckenangeboten über eine Internet-Schnittstelle, eine Sprach-Schnittstelle oder eine SMS-Schnittstelle empfangen wird.

7. Datenverarbeitungsvorrichtung nach Anspruch 1, **dadurch gekennzeichnet, dass** eine Streckenanfrage von den Verwaltungseinrichtungen von Streckenanfragen über eine Internet-Schnittstelle, eine Sprach-Schnittstelle oder eine SMS-Schnittstelle empfangen wird.

8. Datenverarbeitungsvorrichtung nach Anspruch 1, **dadurch gekennzeichnet, dass** die Verwaltungseinrichtungen der Anzeige einer Liste von Streckenangeboten auf einem Bildschirm außerdem konfiguriert sind, eine Geolokalisierung des Bildschirms durchzuführen.

9. Datenverarbeitungsverfahren für die Verwaltung von Angeboten und Anfragen von Fahrgemeinschaftsstrecken, **dadurch gekennzeichnet, dass** es die folgenden Schritte aufweist:
- bei Empfang eines Streckenangebots von einem ersten Benutzer (5), wobei das Streckenangebot Informationen bezüglich der Strecke und des ersten Benutzers enthält, das empfangene Streckenangebot in Zuordnung zu einem Angebot-Identifikationscode zu speichern (S2),
- aus empfangenen Streckenangeboten eine auf einem Bildschirm anzuzeigende Liste von Streckenangeboten und zugeordneten Angebot-Identifikationscodes zu bestimmen (S3), wobei die Streckenangebote der Liste abhängig von einer Lokalisierung des Bildschirms ausgewählt werden,
- bei Empfang von einem zweiten Benutzer eines einem Streckenangebot der angezeigten Liste zugeordneten Angebot-Identifikationscodes, den zweiten Benutzer mit dem ersten Benutzer zu verknüpfen (S7), der das dem empfangenen Angebot-Identifikationscode zugeordnete Streckenangebot übertragen hat,
wobei die Verknüpfung den Empfang des Angebot-Identifikationscodes in Form eines digitalen Codes bei einem interaktiven Sprachserver während des Anrufs beim interaktiven Sprachserver und eine telefonische Verknüpfung des zweiten Benutzers mit dem ersten Benutzer während des Anrufs beim interaktiven Sprachserver enthält.

10. Verfahren nach Anspruch 9, das nach Ablauf eines ersten Streckenangebots einen Schritt der Zuordnung des Angebot-Identifikationscodes, der dem ersten Streckenangebot zugeordnet worden war, zu einem zweiten Streckenangebot enthält.

11. Verfahren nach Anspruch 9, **dadurch gekennzeichnet, dass** es einen Schritt der Geolokalisierung des Bildschirms aufweist.

12. Computerprogramm, das Anweisungen zur Durchführung des Verfahrens nach einem der Ansprüche 9 bis 11 aufweist, wenn dieses Programm von einem Prozessor ausgeführt wird.

## Claims

1. Data processing device (1) for managing carpool trip offers and requests, **characterized by**:
- means (2) for managing trip offers, which means are configured to:
• receive a trip offer from a first user (5), said trip offer comprising information regarding the trip and the first user, and
• store the received trip offer in association with an offer identification code,
- means (3) for managing the display of a list of trip offers on a screen (6, 7a, 7b), which means are configured to:
• determine, from among trip offers received by the means for managing trip offers, a list of trip offers and of associated offer identification codes to be displayed on the screen, the trip offers in the list being selected on the basis of a location of the screen, and
• transmit the determined list of trip offers and the associated identification codes to the screen,
- connecting means, which are configured to:
• receive, from a second user (8), an offer identification code associated with a trip offer from said displayed list, and
• connect the second user to the first user who transmitted the trip offer associated with said received offer identification code;
wherein the connecting means comprise an interactive voice response server, which is configured to receive the offer identification code from the second user in the form of a numerical code during a call to the interactive voice response server, and to connect the second user to said first user over the telephone during the call to the interactive voice response server.

2. Data processing device according to Claim 1, **characterized in that** a trip offer comprises information that allows the user who transmitted said trip offer to be contacted, the connecting step being performed without transmitting the information that allows said user to be contacted.

3. Data processing device according to Claim 1 or 2, comprising means for associating an offer identification code with a trip offer, which means are configured, after a first trip offer has expired, to associate the offer identification code that was associated with the first trip offer with a second trip offer.

4. Data processing device according to Claim 3, wherein the associating means are configured to wait for a minimum waiting time before associating the offer identification code with a second trip offer.

5. Data processing device according to Claim 3, wherein the user who transmitted the first trip offer is distinct from the user who transmitted the second trip offer.

6. Data processing device according to Claim 1, **characterized in that** a trip offer is received by the means for managing trip offers via an Internet interface, a voice interface or an SMS interface.

7. Data processing device according to Claim 1, **characterized in that** a trip request is received by the means for managing trip requests via an Internet interface, a voice interface or an SMS interface.

8. Data processing device according to Claim 1, **characterized in that** the means for managing the display of a list of trip offers on a screen are further configured to geolocate the screen.

9. Data processing method for managing carpool trip offers and requests, **characterized in that** it includes the following steps:
- upon receiving a trip offer from a first user (5), said trip offer comprising information regarding the trip and the first user, storing (S2) the received trip offer in association with an offer identification code,
- determining (S3), from among received trip offers, a list of trip offers and of associated offer identification codes to be displayed on a screen, the trip offers in the list being selected on the basis of a location of the screen,
- upon receiving, from a second user, an offer identification code associated with a trip offer from said displayed list, connecting (S7) the second user to the first user who transmitted the trip offer associated with said received offer identification code,
wherein the connecting operation comprises the offer identification code being received in the form of a numerical code by an interactive voice response server during the call to the interactive voice response server, and the second user being connected to said first user over the telephone during the call to the interactive voice response server.

10. Method according to Claim 9, comprising, after a first trip offer has expired, a step of associating the offer identification code that was associated with the first trip offer with a second trip offer.

11. Method according to Claim 9, **characterized in that** it includes a step of geolocating the screen.

12. Computer program including instructions for implementing the method according to any one of Claims 9 to 11 when said program is executed by a processor.
